# EUROPÄISCHE PATENTANMELDUNG

(11) **EP 3 171 323 A1**
(43) Veröffentlichungstag der Anmeldung: **24.05.2017**
(21) Anmeldenummer: 15195580.4
(22) Anmeldetag: 20.11.2015
(51) Int. Cl.: G06Q 30/06

(54) **SYSTEM UND VERFAHREN ZUM ERMITTELN UND AUSGEBEN EINES ODER MEHRERER PASSGENAUER BEKLEIDUNGSARTIKEL**

(71) Anmelder: Anil Kohli & Heide Meyer GbR, 10719 Berlin (DE)
(72) Erfinder: Meyer, Heide, 10719 Berlin (DE); Kohli, Anil, 10437 Berlin (DE)
(74) Vertreter: Prinz & Partner mbB

(57) **Zusammenfassung**

System und Verfahren zum Ermitteln und Ausgeben eines oder mehrerer passgenauer Bekleidungsartikel sowie ein Computerprogramm hierfür.

## Beschreibung

### Technisches Feld:

Die vorliegende Erfindung betrifft ein System und Verfahren zum Ermitteln und Ausgeben eines oder mehrerer passgenauer Bekleidungsartikel sowie ein Computerprogramm hierfür.

### Stand der Technik:

In der heutigen Zeit kann ein Bekleidungssuchender, ob im niedergelassenen Geschäft oder im Online-Handel, zwar auf eine große Vielfalt an Bekleidungsartikeln zugreifen. Jedoch ermöglicht ihm die zur Verfügung stehende Information zur Konfektionsgröße des Bekleidungsartikels in vielen Fällen leider nicht einen für ihn passgenauen Bekleidungsartikel direkt auszuwählen.

Dies führt in niedergelassenen Geschäften beispielsweise dazu, dass der Bekleidungssuchende zu einem Bekleidungsartikel mehr als eine Konfektionsgröße zum Anprobieren mit in die Kabine nimmt. Einerseits wird dadurch die Zeit für die Anprobe erhöht und andererseits können aufgrund der Anprobe mehrerer Bekleidungsartikel auch Bekleidungsartikel, die nicht ausgewählt werden, Gebrauchsspuren wie Make-Up-Flecken etc. aufweisen. Entsprechend beeinträchtige Bekleidungsartikel müssen entweder gereinigt oder mit einem Preisabschlag verkauft werden. Beides ist mit finanziellen Einbußen, d.h. Nebenkosten, für den Einzelhändler verbunden.

Auch im Online-Handel werden üblicherweise mehr als eine Konfektionsgröße eines Bekleidungsartikels vom Bekleidungssuchenden bestellt, so dass Retouren seitens der Bekleidungssuchenden von Anfang an eingeplant werden. Während der Bekleidungssuchende neben dem erhöhten Zeitaufwand bei der Anprobe auch den Zeitaufwand und gegebenenfalls die Kosten der Versendung der Retouren zu tragen hat, muss der Online-Händler die, aufgrund des höheren Transportgewichts, höheren Transportkosten, die administrativen Kosten verursacht durch Retouren sowie die möglichen finanziellen Einbußen aufgrund von Gebrauchsspuren, d.h. Nebenkosten, tragen. Aufgrund des Transports der entsprechenden Retouren steigt zudem der CO₂-Ausstoß, so dass Retouren auch einen negativen Einfluss auf die Umwelt haben.

Dies gilt umso mehr, als dass Konfektionsgrößen von Bekleidungsartikeln unterschiedlicher Hersteller unterschiedlich ausfallen, aber auch die Konfektionsgrößen von Bekleidungsartikel eines Herstellers aufgrund des Designs unterschiedlich ausfallen können.

Aufgrund der vorstehend beschriebenen Nachteile besteht das Bedürfnis, dass ein Bekleidungssuchender passgenaue Bekleidungsartikel findet, ohne mehrere Konfektionsgrößen anprobieren zu müssen und damit Zeit und Kosten zu sparen sowie gegebenenfalls die Umweltbelastung zu senken.

Der vorliegenden Erfindung liegt damit die Aufgabe zu Grunde ein System und ein Verfahren zur Verfügung zu stellen, dass einem Bekleidungssuchenden ermöglicht einen oder mehrere passgenaue Bekleidungsartikel zu finden ohne verschiedene Konfektionsgrößen auszuprobieren und/oder die Zeit der Anprobe zu verringern und/oder die Nebenkosten für den Bekleidungssuchenden und/oder den Händler zu verringern und/oder die Umweltbelastung insbesondere hervorgerufen aufgrund von Retouren, zu verringern.

### Kurze Beschreibung der Erfindung:

Die vorliegende Aufgabe wird gelöst durch die Erfindungsgegenstände der unabhängigen Ansprüche. Bevorzugte Ausgestaltungen werden in den abhängigen Ansprüchen sowie in der nachfolgenden detaillierten Beschreibung offenbart. Kombinationen der einzelnen erfindungsgemäßen Ausgestaltungen sind, sofern sie aus fachmännischer Sicht sinnvoll sind, ebenfalls offenbart.

Der erste Erfindungsgegenstand betrifft ein System zum Ermitteln und Ausgeben eines oder mehrerer passgenauer Bekleidungsartikel für einen Bekleidungssuchenden, dadurch gekennzeichnet, dass das System folgende Einrichtungen umfasst:
a. Einrichtung A zum Eingeben und/oder Bereitstellen von ein oder mehreren personenbezogenen Daten des Bekleidungssuchenden,
b. Einrichtung B zum Ermitteln von ein oder mehreren Solleigenschaften des Bekleidungsartikels unter Verwendung der durch Einrichtung A bereitgestellten personenbezogenen Daten des Bekleidungssuchenden,
c. Einrichtung C zum Bereitstellen von ein oder mehreren Eigenschaften vorbestimmter Bekleidungsartikel,
d. Einrichtung D zum Zuordnen eines oder mehrerer der Bekleidungsartikel aus Einrichtung C zu den Solleigenschaften aus Einrichtung B nach vorbestimmten Zuordnungsregeln und
e. Einrichtung E zum Ausgeben des oder der in Einrichtung D zugeordneten Bekleidungsartikel und Darstellung auf Einrichtung A.

Der zweite Erfindungsgegenstand betrifft ein computerimplementiertes Verfahren zum Ermitteln und Ausgeben eines oder mehrerer passgenauer Bekleidungsartikel für einen Bekleidungssuchenden, dadurch gekennzeichnet, dass das Verfahren folgende Schritte umfasst
a. Eingeben und/oder Bereitstellen eines oder mehrerer personenbezogener Daten des Bekleidungssuchenden in eine geeignete Einrichtung A,
b. Ermitteln von Solleigenschaften eines Bekleidungsartikels unter Verwendung der gemäß Schritt a) bereitgestellten personenbezogener Daten des Bekleidungssuchenden durch eine geeignete Einrichtung B,
c. Bereitstellen von ein oder mehreren Eigenschaften vorbestimmter Bekleidungsartikel durch eine geeignete Einrichtung C, wobei die Eigenschaften zu ein oder mehreren in Schritt b) ermittelten Solleigenschaften korrelieren,
d. Zuordnen wenigstens eines vorbestimmten Bekleidungsartikels aus Schritt c) nach vorbestimmten Zuordnungsregeln auf Basis der in Schritt d) ermittelten Solleigenschaften durch eine geeignete Einrichtung D und
e. Ausgeben des wenigstens einen in Schritt e) zugeordneten Bekleidungsartikels durch eine geeignete Einrichtung E und Darstellung auf Einrichtung A.

Der dritte Erfindungsgegenstand betrifft ein Computerprogramm mit Programmcode zur Durchführung des erfindungsgemäßen Verfahrens gemäß zweitem Erfindungsgegenstand, wenn das Programm in einem Computer und/oder mittels Datenübertragung auf einem oder mehreren Servern ausgeführt wird.

### Detaillierte Beschreibung der Erfindung:

Die vorliegende Erfindung beruht auf der Erkenntnis, dass durch die Verwendung personenbezogener Daten des Bekleidungssuchenden einerseits und entsprechend korrelierender Maße der jeweiligen Bekleidungsartikel andererseits mit Hilfe des erfindungsgemäßen Computersystems bzw. des erfindungsgemäßen computerimplementierten Verfahrens passgenaue Bekleidungsartikel für einen Bekleidungssuchenden ausgegeben und dargestellt werden können.

Durch die Darstellung eines oder mehrerer passgenauer Bekleidungsartikel kann der Bekleidungssuchende entweder direkt im niedergelassenen Geschäft oder auch im Online-Handel den Bekleidungsartikel direkt auswählen, welcher ihm aufgrund seiner Körpermaße passt. Damit fällt der Umstand weg, dass alternative Konfektionsgrößen anprobiert werden müssen bzw. alternative Konfektionsgrößen bestellt und letztendlich auch retourniert werden müssen.

Somit bieten das erfindungsgemäße System und das erfindungsgemäße Verfahren eine Möglichkeit die Zeit für die Anprobe der Bekleidungsartikel zu reduzieren, da nicht mehrere sondern nur eine Konfektionsgröße anprobiert werden muss. Darüber hinaus wird das Risiko der Gebrauchsspuren an nicht ausgewählten Bekleidungsartikeln reduziert, da gerade keine weiteren Konfektionsgrößen anprobiert werden müssen. Folglich verringert sich auch das Nebenkostenrisiko des Händlers.

Zudem erzielen das erfindungsgemäße System und das erfindungsgemäße Verfahren auch im Online-Handel Vorteile sowohl für den Bestellenden als auch für den Händler, da Retouren und damit auch der damit einhergehende Zeit- und Kostenaufwand aufgrund der Reduzierung der Bestellung unterschiedlicher Konfektionsgrößen wegfallen oder zumindest vermindert werden.

Schließlich profitiert auch die Umwelt von dem erfindungsgemäßen System und dem erfindungsgemäßen Verfahren, da wegen eines geringeren Transportgewichtes aufgrund wegfallender Bekleidungsartikeln mit weiteren Konfektionsgrößen sowie reduzierter Retourenanzahl der CO₂-Ausstoß reduziert werden kann.

Gemäß dem ersten Erfindungsgegenstand wird ein System zum Ermitteln und Ausgeben eines oder mehrerer passgenauer Bekleidungsartikel für einen Bekleidungssuchenden bereitgestellt. Das erfindungsgemäße System liegt vorzugsweise in digitaler Form vor und nutzt weiter vorzugsweise digitale Datenübermittlung, noch weiter bevorzugt Datenübermittlung über das Internet. Allerdings ist es ebenfalls möglich, dass das erfindungsgemäße System auf einem Computer oder einem Computernetzwerk eingerichtet ist (nachfolgend "Terminallösung" genannt). Bei der Terminallösung sind vorzugsweise alle Einrichtungen A, B, C, D und E in dem Computer oder dem Computernetzwerk enthalten. Der Computer oder das Computernetzwerk kann bei der Terminallösung aber auch gegebenenfalls an das Internet angeschlossen sein. In einer weiter bevorzugten Form werden das erfindungsgemäße System und das erfindungsgemäße Verfahren mittels Datenübertragung im Internet durchgeführt, vorzugsweise mittels einer Webseite, einer WebAPP oder einer APP.

Das erfindungsgemäße System und das erfindungsgemäße Verfahren umfassen Einrichtung A mit geeigneten Mitteln zum Eingeben und/oder Bereitstellen von ein oder mehreren personenbezogenen Daten des Bekleidungssuchenden. Einrichtung A stellt vorzugsweise eine digitale Datenverarbeitungseinheit dar, vorzugsweise ein digitales Endgerät mit Zugang zum Internet, weiter vorzugsweise ausgewählt aus der Gruppe bestehend aus: Computer, Laptop, Tablet-Computer und Smartdevices, wie Smartphone und Smartwatch.

Die ein oder mehreren personenbezogenen Daten werden durch den Bekleidungssuchenden durch geeignete Mittel, vorzugsweise mittels einer Eingabemaske in Einrichtung A, vorzugsweise das digitale Endgerät eingegeben oder bei Internetzugang durch Verlinkung mit anderen Netzwerken bereitstellt und die so erhaltenen personenbezogenen Daten werden auf Einrichtung A oder vorzugsweise mittels Datenübertragung in einem Speichermedium vorzugsweise auf einem Server abgespeichert. Bei der Terminallösung kann der Bekleidungssuchende seine personenbezogenen Daten vorzugsweise ebenfalls mittels einer Eingabemaske selbst eingeben, er kann die personenbezogenen Daten aber bei Verlinkung mit einer geeigneten Datenkarte (sogenannte "Smartcard") in Einrichtung A bereitstellen und mittels Datenübertragung auf ein Speichermedium des Computers bzw. des Computernetzwerks speichern oder er kann auch - sofern der Computer bzw. das Computernetzwerk an das Internet angeschlossen ist - seine personenbezogenen Daten durch Verlinkung mit anderen Netzwerken bereitstellen und mittels Datenübertragung auf ein Speichermedium des Computers bzw. des Computernetzwerks speichern.

Die ein, zwei, drei oder mehreren personenbezogenen Daten werden üblicherweise ausgewählt aus der Gruppe bestehend aus: Körpermaß des Bekleidungssuchenden; das Geschlecht des Bekleidungssuchenden; und das Alter des Bekleidungssuchenden. Vorzugsweise umfasst die Gruppe der personenbezogenen Daten keine Konfektionsgröße, da Konfektionsgrößen bei unterschiedlichen Kleidungsstücken sowie unterschiedlichen Herstellern anders bemaßt sind.

Ein, zwei, drei oder mehr Angaben zum Körpermaß werden bevorzugt ausgewählt aus der Gruppe bestehend aus Körpergröße, Kopfumfang, Halsumfang, Schulterbreite, Rückenbreite, Brustumfang, Überbrustumfang, Unterbrustumfang, Taillenumfang, Bauchumfang, Hüftumfang, Gesäßumfang, Oberschenkelumfang, Wadenumfang, Handumfang, Handgelenkumfang, Armlänge, Oberarmumfang, Handlänge, Beinlänge, Schrittlänge, Knöchelumfang, Fußlänge, Fußbreite, Fußspannhöhe, Länge von Hals zu Schulter, Länge von Schulter bis Schritt, Länge Taille zum Schritt, Länge von Taille bis Knie.

Ein, zwei, drei oder mehr Angaben zum Geschlecht des Bekleidungssuchenden werden bevorzugt ausgewählt aus der Gruppe bestehend aus männlich, weiblich, Frau, Mann, Mädchen, Junge, oder unisex.

Das Alter der Bekleidungssuchenden wird vorzugsweise in Monaten, Jahren oder Zeiträumen angegeben.

In einer weiter bevorzugten erfindungsgemäßen Ausgestaltung kann der Bekleidungssuchende ein, zwei, drei, vier oder mehrere weitere Auswahlkriterien anhand geeigneter Mittel in die Einrichtung A eingeben, vorzugsweise mittels einer Eingabemaske, und abgespeichert bzw. in Einrichtung A durch Verlinkung mit anderen Netzwerken oder Datenkarten mittels digitaler Datenübertragung bereitgestellt und mittels Datenübertragung auf ein Speichermedium des Computers bzw. des Computernetzwerks gespeichert.

Die ein, zwei, drei, vier oder mehreren weiteren Auswahlkriterien werden bevorzugt ausgewählt aus der Gruppe bestehend aus Bekleidungsart; Bekleidungstyp; Passform der Bekleidung; Anlass des Tragens des Bekleidungsartikels; Farbe und/oder Muster des Bekleidungsartikels; Material des Bekleidungsartikels, Hersteller des Bekleidungsartikels; und Preissegment des Bekleidungsartikels; Ort, an dem der Bekleidungsartikel gekauft werden kann, bevorzugt Ort der Niederlassung und/oder Online-Shop.

Üblicherweise können alle Bekleidungsarten ausgewählt werden. In einer bevorzugten Ausgestaltung kann die Bekleidungsart ausgewählt werden aus der Gruppe bestehend aus Kleidung und Schuhe.

Kleidung wird vorzugsweise ausgewählt aus der Gruppe bestehend aus Unterwäsche, wie beispielsweise Unterhose, Unterhemd, Slip, String, Tanga, Panty, Taillenslip, Miederhose, Body, Corsislip, Büstenhalter (BH), Büstenhalterhemd (BH-Hemd) und Strampler; Nachtwäsche, wie beispielsweise Nachthemd, Schlafanzug und Pyjama; Erotikwäsche; Bademode, wie beispielsweise Badeshort, Badehose, Badeanzug, Bikini und Bademantel; Hose, wie beispielsweise Jeans und Freizeithose; Overall; Kleid, wie beispielsweise langes Kleid, kurzes Kleid, Abendkleid; Rock, wie beispielsweise langer Rock und kurzer Rock; Bluse; Tunika; Hemd; Top; Shirt, wie Langarm-Shirt, Halbarm-Shirt und T-Shirt; Pullover; Pollunder; Jacke; Twin-Set; Handschuhe; Anzug; Kostüm.

Schuhe werden vorzugsweise ausgewählt aus der Gruppe bestehend aus Ballerinas, Sandalen, Slipper, Sneaker, Schnürschuhe, Hausschuhe, Pumps, High Heels, Pantoletten, Outdoorschuhe, Sportschuhe, Stiefelletten, Stiefel, Boots und Lauflernschuhe.

Die Passform der Bekleidung wird vorzugsweise ausgewählt aus der Gruppe bestehend aus körperbetont, weit geschnitten und enganliegend.

Der Anlass des Tragens des Bekleidungsartikels wird bevorzugt ausgesucht aus Alltagskleidung, Geschäftskleidung, Businesskleidung, Abendrobe, festlicher Anlass, Hochzeit und Trauer.

Die üblichen Farben und/oder Muster eines Bekleidungsartikels können ausgewählt werden.

Die üblichen Materialien eines Bekleidungsartikels können gewählt werden.

Die üblichen Hersteller eines Bekleidungsartikels können ausgewählt werden.

Das Preissegment des Bekleidungsartikels kann ausgewählt werden.

Der Ort an bzw. die Region der Niederlassung und/oder des Online-Shops, in der der Bekleidungsartikel gekauft werden kann, kann ausgewählt werden.

Aufgrund der Eingabe bzw. der Bereitstellung der personenbezogenen Daten und gegebenenfalls der weiteren Auswahlkriterien in Einrichtung A kann in den folgenden erfindungsgemäßen Einrichtungen bzw. erfindungsgemäßen Verfahrensschritten ein oder mehrere passgenaue Bekleidungsartikel ermittelt und ausgegeben werden.

Das erfindungsgemäße System und das erfindungsgemäße Verfahren umfassen ebenfalls Einrichtung B zum Ermitteln von ein oder mehreren Solleigenschaften des Bekleidungsartikels unter Verwendung der durch Einrichtung A bereitgestellten personenbezogenen Daten des Bekleidungssuchenden. Einrichtung B stellt üblicherweise ebenfalls eine digitale Datenverarbeitungseinheit dar und kann vorzugsweise auf die Informationen der personenbezogenen Daten zugreifen. Die Solleigenschaften der Einrichtung B kann auf dem gleichen oder einem anderen Speichermedium, vorzugsweise dem gleichen oder einem anderen Server als die personenbezogenen Daten abgespeichert sein.

Einrichtung B ermittelt üblicherweise auf Basis der personenbezogenen Daten ein oder mehrere hierzu korrelierende Solleigenschaften des oder der Bekleidungsartikel. Die ein, zwei, drei, vier oder mehreren Solleigenschaften der Bekleidungsartikel können bevorzugt ausgewählt werden aus der Gruppe bestehend aus: Maßangaben des Bekleidungsartikels; Geschlechtsangabe für Träger des Bekleidungsartikels, Altersangabe für Träger des Bekleidungsartikels. Hierbei korrelieren die Maßangaben der Solleigenschaften mit den Angaben zur Körpermaßangaben des Bekleidungssuchenden, die Angaben zum Alter und dem Geschlecht der Solleigenschaften mit den entsprechenden Angaben des Bekleidungssuchenden.

Die Maßangaben der Solleigenschaften werden bevorzugt ausgewählt aus der Gruppe bestehend aus: Körperlänge des Bekleidungsartikelträgers, Länge des Bekleidungsartikels, Kopfweite, Halsweite, Kragenweite, Schulterweite, Rückenweite, Oberweite, Brustweite, Überbrustweite, Unterbrustweite, Taillenweite, Bauchweite, Hüftweite, Gesäßweite, Oberschenkelweite, Wadenweite, Handweite, Handgelenkweite, Armlänge, Oberarmweite, Handlänge, Beinlänge, Schrittlänge, Knöchelweite, Fußlänge, Fußweite, Fußspannhöhe, Länge von Hals zu Schulter, Länge von Schulter bis Schritt, Länge Taille zum Schritt, Länge von Taille bis Knie.

Die Geschlechtsangabe der Solleigenschaften werden bevorzugt angegeben mit männlich, weiblich, Frau, Mann, Mädchen, Junge, oder unisex.

Die Altersangabe der Solleigenschaften wird vorzugsweise in Monaten, Jahren oder Zeiträumen angegeben.

Mit anderen Worten, das erfindungsgemäße System sowie das erfindungsgemäße Verfahren ermöglichen das Ermitteln von Solleigenschaften von passgenauen Bekleidungsartikeln auf Basis der eingegebenen bzw. bereitgestellten ein oder mehreren personenbezogenen Daten und gegebenenfalls der ein oder mehreren weiteren Auswahlkriterien.

Das erfindungsgemäße System und das erfindungsgemäße Verfahren umfassen ebenfalls Einrichtung C zum Bereitstellen von ein oder mehreren Eigenschaften vorbestimmter Bekleidungsartikel. Vorbestimmte Bekleidungsartikel sind solche Bekleidungsartikel, die ein Bekleidungssuchender erwerben - d.h. kaufen, leihen, ersteigern, etc. - kann, sei es in einem niedergelassenen Geschäft oder im Online-Handel. Die Bekleidungsartikel werden dementsprechend nicht selbst in der Einrichtung C bereit gestellt, sondern lediglich Informationen über die Eigenschaften der vorbestimmten Bekleidungsartikel.

Einrichtung C stellt üblicherweise eine digitale Datenbank dar und kann vorzugsweise auf die Solleigenschaften zugreifen. Aus Gründen der Datensicherheit ist Einrichtung C vorzugsweise auf einem anderen Server als personenbezogenen Daten und ggf. der Solleigenschaften abgespeichert. Einrichtung C umfasst als digitale Datenbank ein oder mehrere Eigenschaften zu vorbestimmten Bekleidungsartikeln, d.h. ein oder mehrere Eigenschaften von ein oder mehreren Bekleidungsartikel ein oder mehrerer Hersteller, vorzugsweise ein oder mehrere Konfektionsgrößen eines oder mehrerer Bekleidungsartikel.

Die ein oder mehreren Eigenschaften vorbestimmter Bekleidungsartikel werden vorzugsweise ausgewählt aus der Gruppe bestehend aus: Maßangaben des Bekleidungsartikels; Geschlechtsangabe für Träger des Bekleidungsartikels, Altersangabe für Träger des Bekleidungsartikels.

Die ein, zwei, drei, vier oder mehreren Maßangaben der vorbestimmten Bekleidungsartikel werden bevorzugt ausgewählt aus der Gruppe bestehend aus: Körperlänge des Bekleidungsartikeltragenden, Länge des Bekleidungsartikels, Kopfweite, Halsweite, Kragenweite, Schulterweite, Rückenweite, Oberweite, Brustweite, Überbrustweite, Unterbrustweite, Taillenweite, Bauchweite, Hüftweite, Gesäßweite, Oberschenkelweite, Wadenweite, Handweite, Handgelenkweite, Armlänge, Oberarmweite, Handlänge, Beinlänge, Schrittlänge, Knöchelweite, Fußlänge, Fußweite, Fußspannhöhe, Länge von Hals zu Schulter, Länge von Schulter bis Schritt, Länge Taille zum Schritt, Länge von Taille bis Knie.

Die Geschlechtsangabe zu den Trägern der vorbestimmten Bekleidungsartikel werden bevorzugt angegeben mit männlich, weiblich, Frau, Mann, Mädchen, Junge, oder unisex.

Die Altersangabe zu den Trägern der vorbestimmten Bekleidungsartikel wird vorzugsweise in Monaten, Jahren oder Zeiträumen angegeben.

Die ein oder mehreren Eigenschaften der vorbestimmten Bekleidungsartikel können desweiteren Informationen zu ein oder mehreren weiteren Auswahlkriterien umfassen. Die ein, zwei, drei, vier oder mehreren weiteren Auswahlkriterien werden bevorzugt ausgewählt aus der Gruppe bestehend aus Bekleidungsart; Bekleidungstyp; Passform der Bekleidung; Anlass des Tragens des Bekleidungsartikels; Farbe und/oder Muster des Bekleidungsartikels; Material des Bekleidungsartikels, Hersteller des Bekleidungsartikels; und Preissegment des Bekleidungsartikels; Ort, an dem der Bekleidungsartikel gekauft werden kann, bevorzugt Ort der Niederlassung und/oder Online-Shop.

Üblicherweise können alle Bekleidungsarten der vorbestimmten Bekleidungsartikel bereitgestellt werden. In einer bevorzugten Ausgestaltung kann die Bekleidungsart ausgewählt werden aus der Gruppe bestehend aus Kleidung und Schuhe.

Kleidung wird vorzugsweise ausgewählt aus der Gruppe bestehend aus Unterwäsche, wie beispielsweise Unterhose, Unterhemd, Slip, String, Tanga, Panty, Taillenslip, Miederhose, Body, Corsislip, Büstenhalter (BH), Büstenhalterhemd (BH-Hemd) und Stampler; Nachtwäsche, wie beispielsweise Nachthemd, Schlafanzug und Pyjama; Erotikwäsche; Bademode, wie beispielsweise Badeshort, Badehose, Badeanzug, Bikini und Bademantel; Hose, wie beispielsweise Jeans und Freizeithose; Overall; Kleid, wie beispielsweise langes Kleid, kurzes Kleid, Abendkleid; Rock, wie beispielsweise langer Rock und kurzer Rock; Bluse; Tunika; Hemd; Top; Shirt, wie Langarm-Shirt, Halbarm-Shirt und T-Shirt; Pullover; Pollunder; Jacke; Twin-Set; Handschuhe; Anzug; Kostüm.

Schuhe werden vorzugsweise ausgewählt aus der Gruppe bestehend aus Ballerinas, Sandalen, Slipper, Sneaker, Schnürschuhe, Hausschuhe, Pumps, High Heels, Pantoletten, Outdoorschuhe, Sportschuhe, Stiefelletten, Stiefel, Boots und Lauflernschuhe.

Die Passform des vorbestimmten Bekleidungsartikels wird vorzugsweise ausgewählt aus der Gruppe bestehend aus körperbetont, weit geschnitten und enganliegend.

Der Anlass des Tragens des vorbestimmten Bekleidungsartikels wird bevorzugt ausgesucht aus Alltagskleidung, Geschäftskleidung, Businesskleidung, Abendrobe, festlicher Anlass, Hochzeit und Trauer.

Die üblichen Farben und/oder Muster des vorbestimmten Bekleidungsartikels können bereitgestellt werden.

Die üblichen Materialien des vorbestimmten Bekleidungsartikels können bereitgestellt werden.

Die üblichen Hersteller des vorbestimmten Bekleidungsartikels können bereitgestellt werden.

Das Preissegment des Bekleidungsartikels kann bereitgestellt werden.

Der Ort an bzw. die Region der Niederlassung und/oder des Online-Shops in der der Bekleidungsartikel gekauft werden kann, kann bereitgestellt werden.

Mit anderen Worten, die bereitgestellten Eigenschaften der vorbestimmten Bekleidungsartikel ermöglichen nach Abgleich mit den Solleigenschaften eine passgenaue Auswahl eines oder mehrerer Bekleidungsartikel für den Bekleidungssuchenden.

Das erfindungsgemäße System und das erfindungsgemäße Verfahren umfassen des Weiteren Einrichtung D zum Zuordnen eines oder mehrerer der vorbestimmten Bekleidungsartikel aus Einrichtung C zu den Solleigenschaften aus Einrichtung B nach vorbestimmten Zuordnungsregeln. Die vorbestimmten Zuordnungsregeln ermöglichen das Zuordnen passgenauer Kleidung für den Bekleidungssuchenden, wobei die ein oder mehreren Eigenschaften eines vorbestimmten Bekleidungsartikels mit ein, zwei, drei, vier oder mehreren Solleigenschaften und/oder mit ein, zwei, drei, vier oder mehreren weiteren Auswahlkriterien verglichen wird und bei Übereinstimmung und/oder bei Überlappung mit einer, zwei, drei, vier oder mehreren Solleigenschaften zugeordnet wird. Dabei kann die Passgenauigkeit der zugeordneten Bekleidungsartikel dadurch erhöht werden, dass die Übereinstimmung bzw. Überlappung in mehr als einer, vorzugsweise mehr als zwei, drei, vier oder mehr Eigenschaften vorliegt. Die Zuordnung in Einrichtung D wird mit geeigneten Mitteln durchgeführt.

Beispielsweise werden ein, zwei, drei oder mehrere Eigenschaften bzw. weitere Auswahlkriterien von vorbestimmten Bekleidungsartikeln mit den ein, zwei, drei, vier oder mehreren Solleigenschaften bzw. weiteren Auswahlkriterien auf Übereinstimmung bzw. Überlappung verglichen und bei Übereinstimmung bzw. Überlappung entsprechend passgenaue vorbestimmte Bekleidungsartikel zugeordnet:
Büstenhalter und Büstenhalterhemd (BH-Hemd): Unterbrustweite, Oberbrustweite, und gegebenenfalls Länge Schulter bis Taille; gegebenenfalls weitere Angaben zu Geschlecht und Alter; gegebenenfalls weitere Auswahlkriterien wie, BH-Cup-Form, wie beispielsweise Vollschale, Halbschale, Dirndlform, gepusht, gemoldete, Erotic Wäsche, etc.

Unterhose, Slip: Taillenweite, Hüftweite, Gesäßweite, gegebenenfalls Länge von Taille zum Schritt; gegebenenfalls weitere Angaben zu Geschlecht und Alter; gegebenenfalls weitere Auswahlkriterien wie String, Tanga, Panty, Taillenslip, Miederhose etc.

Body, Corsislip, Bademode, Nachtwäsche: Unterbrustweite, Oberbrustweite, und gegebenenfalls Länge Schulter bis Taille; Taillenweite, Hüftweite, Gesäßweite, gegebenenfalls Länge von Taille zum Schritt; gegebenenfalls weitere Angaben zu Geschlecht und Alter; gegebenenfalls weitere Auswahlkriterien.

Strampler: Oberweite, Armlänge, Länge Hals bis Schritt gegebenenfalls weitere Angaben zu Geschlecht und Alter; gegebenenfalls weitere Auswahlkriterien.

Hose, wie beispielsweise Jeans und Freizeithose: Taillenweite, Hüftweite, Gesäßweite, Oberschenkelweite, Beinlänge, Wadenweite, Knöchelweite, Schrittlänge; gegebenenfalls weitere Angaben zu Geschlecht und Alter; gegebenenfalls weitere Auswahlkriterien.

Overall; Kleid, wie beispielsweise langes Kleid, kurzes Kleid, Abendkleid: Oberweite, Taillenweite, Hüftweite, Körperlänge, Armlänge, Länge Taille bis zum Knie, gegebenenfalls weitere Angaben zu Geschlecht und Alter; gegebenenfalls weitere Auswahlkriterien.

Rock, wie beispielsweise langer Rock und kurzer Rock: Taillenweite, Hüftweite, Gesäßweite, Beinlänge, Körperlänge, Länge Taille bis zum Knie; gegebenenfalls weitere Angaben zu Geschlecht und Alter; gegebenenfalls weitere Auswahlkriterien.

Bluse; Tunika; Hemd; Top; Shirt; Pullover; Pollunder; Jacke; Twin-Set: Oberweite, Rückenweite, Brustweite, Bauchweite, Länge Hals bis Taille, Armlänge, Oberarmweite, Handgelenkweite, Halsweite, Kragenweite; gegebenenfalls weitere Angaben zu Geschlecht und Alter; gegebenenfalls weitere Auswahlkriterien.

Anzug; Kostüm: Länge Hals bis Schulter, Länge Schulter bis Schulter, Länge Hals bis Taille, Lange Hals bis Becken, Länge Taille bis Knie, Brustweite, Armlänge, Jacketlänge, Schrittlänge, Beinlänge, Hosenlänge, Rocklänge, Halsweite, Kragenweite, Oberarmweite, Taillenweite, Bauchweite, Beckenweite, Hosenbundweite, Handgelenkweite, Gesäßweite, Oberschenkelweite, Wadenweite; gegebenenfalls weitere Angaben zu Geschlecht und Alter; gegebenenfalls weitere Auswahlkriterien.

Schuhe: Fußlänge, Fußweite, Fußspannhöhe, Knöchelweite, Wadenweite, Länge Knie bis Fuß; gegebenenfalls weitere Angaben zu Geschlecht und Alter; gegebenenfalls weitere Auswahlkriterien.

Handschuhe: Handlänge, Handgelenkweite, Fingerlänge; gegebenenfalls weitere Angaben zu Geschlecht und Alter; gegebenenfalls weitere Auswahlkriterien

Das erfindungsgemäße System sowie das erfindungsgemäße Verfahren umfassen desweiteren Einrichtung E zum Ausgeben des oder der in Einrichtung D zugeordneten Bekleidungsartikel und Darstellung auf Einrichtung A. Einrichtung E stellt üblicherweise ebenfalls eine digitale Datenverarbeitungseinrichtung dar und ist aus Gründen der Datensicherheit vorzugsweise ebenfalls auf einem anderen Speichermedium, vorzugsweise anderen Server als die personenbezogenen Daten und ggf. die Solleigenschaften und/oder Eigenschaften der vorbestimmten Bekleidungsartikel und/oder zugeordneten Bekleidungsartikel lokalisiert.

Das Ausgeben der zugeordneten Bekleidungsartikel wird mittels geeigneter Mittel von Einrichtung E vorgenommen. Vorzugsweise wird der oder die zugeordneten Bekleidungsartikel mittels digitaler Datenübertragung, weiter bevorzugt mittels Internet von Einrichtung E auf Einrichtung A übertragen und auf Einrichtung A dargestellt, so dass der Bekleidungssuchende die Darstellung der zugeordneten Bekleidungsartikel sehen und/oder hören kann. In einer weiter bevorzugten Ausgestaltung ist Einrichtung E so eingerichtet, dass es die Information des oder der zugeordneten Bekleidungsartikel mittels Datenübertragung ausgibt und die Informationen zu dem oder den zugeordneten Bekleidungsartikeln auf dem vorzugsweise internetfähigen Endgerät des Bekleidungssuchenden dargestellt wird.

In einer weiter bevorzugten Ausgestaltung des erfindungsgemäßen Systems oder des erfindungsgemäßen Verfahrens ist die Einrichtung E so eingerichtet ist, dass sie
- die ein oder mehreren Solleigenschaften und die ein oder mehreren Eigenschaften des oder der zugeordneten Bekleidungsartikel, vorzugsweise gegenübergestellt oder überlagert, ausgibt und auf Einrichtung A darstellt und/oder
- den oder die zugeordneten Bekleidungsartikel dreidimensional, vorzugsweise gegenübergestellt oder überlagert zu einer Silhouette basierend auf ein oder mehreren Solleigenschaften, ausgibt und auf Einrichtung A darstellt und/oder
- den oder die zugeordneten Bekleidungsartikel und den oder die Orte, an dem der oder die Bekleidungsartikel gekauft werden können, vorzugsweise gegenübergestellt oder überlagert, ausgibt und auf Einrichtung A darstellt und/oder
- den oder die zugeordneten Bekleidungsartikel und den oder die Preise, zu denen der oder die Bekleidungsartikel gekauft werden können, vorzugsweise gegenübergestellt oder überlagert ausgibt und auf Einrichtung A darstellt.

In einer weiter bevorzugten Ausgestaltung des erfindungsgemäßen System oder des erfindungsgemäßen Verfahrens werden die personenbezogenen Daten des Bekleidungssuchenden in anonymisierter Form, also anonym, eingegeben und/oder bereitgestellt. Dies bietet den Vorteil, dass sofern die eingegebenen bzw. bereitgestellten personenbezogenen Daten in einem Netzwerk zur Verfügung stehen, kein Rückschluss auf die Person des Bekleidungssuchenden gezogen werden kann und so die Datensicherheit erhöht wird.

In einer weiter bevorzugten Ausgestaltung des erfindungsgemäßen System oder des erfindungsgemäßen Verfahrens werden die in Einrichtung C bereitgestellten Eigenschaften zu vorbestimmten Bekleidungsartikel unterschiedlicher Hersteller bereitgestellt. Dies bietet den Vorteil, dass der Bekleidungssuchende aus einer Vielzahl an unterschiedlichen Bekleidungsartikel seinen passgenauen Artikel auswählen kann. Der Bekleidungssuchende kann zudem erkennen, welcher Hersteller Bekleidungsartikel herstellt, die zu seinen personenbezogenen Daten am besten passen.

Das erfindungsgemäße Computerprogramm mit Programmcode zur Durchführung des erfindungsgemäßen Verfahrens kann auf einem maschinenlesbaren Träger gespeichert sein.

## Patentansprüche

1. System zum Ermitteln und Ausgeben eines oder mehrerer passgenauer Bekleidungsartikel für einen Bekleidungssuchenden, **dadurch gekennzeichnet, dass** das System folgende Einrichtungen umfasst:
a. Einrichtung A zum Eingeben und/oder Bereitstellen von ein oder mehreren personenbezogenen Daten des Bekleidungssuchenden,
b. Einrichtung B zum Ermitteln von ein oder mehreren Solleigenschaften des Bekleidungsartikels unter Verwendung der durch Einrichtung A bereitgestellten personenbezogenen Daten des Bekleidungssuchenden,
c. Einrichtung C zum Bereitstellen von ein oder mehreren Eigenschaften vorbestimmter Bekleidungsartikel,
d. Einrichtung D zum Zuordnen eines oder mehrerer der Bekleidungsartikel aus Einrichtung C zu den Solleigenschaften aus Einrichtung B nach vorbestimmten Zuordnungsregeln und
e. Einrichtung E zum Ausgeben des oder der in Einrichtung D zugeordneten Bekleidungsartikel und Darstellung auf Einrichtung A.

2. System gemäß Anspruch 1, wobei
- Einrichtung A ein internetfähiges Gerät darstellt, bei dem der Bekleidungssuchende in einer entsprechenden Eingabemaske ein oder mehrere personenbezogenen Daten eingibt oder die personenbezogenen Daten durch Verlinkung mit anderen Netzwerken bereitstellt und die so erhaltenen personenbezogenen Daten mittels Datenübertragung in einer Datenbankeinrichtung auf einem Server gespeichert werden und
- Einrichtungen B, C, D und E auf dem gleichen oder mittels Datenübertragung auf einem oder mehreren weiteren Servern eingerichtet sind und
- Einrichtung E auf dem oder den Servern so eingerichtet ist, dass die zugeordneten Bekleidungsartikel mittels Datenübertragung ausgegeben und auf dem internetfähigen Gerät des Bekleidungssuchenden dargestellt wird.

3. System gemäß Anspruch 1 oder 2, wobei der Bekleidungssuchende die personenbezogenen Daten anonym in Einrichtung A eingeben und/oder bereitstellen kann.

4. System gemäß einem der Ansprüche 1 bis 3, wobei die in Einrichtung C bereitgestellten Eigenschaften zu vorbestimmten Bekleidungsartikel unterschiedlicher Hersteller bereitgestellt werden.

5. System gemäß einem der Ansprüche 1 bis 4, wobei in Einrichtung A zusätzlich ein oder mehrere weitere Auswahlkriterien des Bekleidungssuchenden eingegeben und/oder bereitgestellt werden können und die in Einrichtung C bereitgestellten Eigenschaften zu den vorbestimmten Bekleidungsartikeln mit den ein oder mehreren weiteren Auswahlkriterien korrelieren.

6. System gemäß einem der Ansprüche 1 bis 5, wobei
- die in Einrichtung A eingegebenen und/oder bereitgestellten ein oder mehreren personenbezogenen Daten ausgewählt werden aus der Gruppe bestehend aus: Körpermaß des Bekleidungssuchenden, bevorzugt Körpergröße, Kopfumfang, Halsumfang, Schulterbreite, Rückenbreite, Brustumfang, Überbrustumfang, Unterbrustumfang, Taillenumfang, Bauchumfang, Hüftumfang, Gesäßumfang, Oberschenkelumfang, Wadenumfang, Handumfang, Handgelenkumfang, Armlänge, Oberarmumfang, Handlänge, Beinlänge, Schrittlänge, Knöchelumfang, Fußlänge, Fußbreite, Fußspannhöhe, Länge von Hals zu Schulter, Länge von Schulter bis Schritt, Länge Taille zum Schritt, Länge von Taille bis Knie; Geschlecht des Bekleidungssuchenden; und Alter des Bekleidungssuchenden und/oder
- die in Einrichtung A eingegebenen und/oder bereitgestellten ein oder mehreren Auswahlkriterien ausgewählt werden aus der Gruppe bestehend aus: Bekleidungsart; Bekleidungstyp; Passform der Bekleidung; Anlass des Tragens des Bekleidungsartikels; Farbe und/oder des Bekleidungsartikels; Material des Bekleidungsartikels, Hersteller des Bekleidungsartikels; und Preissegment des Bekleidungsartikels; Ort, an dem der Bekleidungsartikel gekauft werden kann, bevorzugt Ort der Niederlassung und/oder Online-Shop und/oder
- die in Einrichtung C bereitgestellten ein oder mehreren Eigenschaften zu dem oder den vorbestimmten Bekleidungsartikeln korrelieren zu den ermittelten Solleigenschaften ausgewählt aus der Gruppe bestehend aus: Körperlänge des Bekleidungsartikeltragenden, Länge des Bekleidungsartikels, Kopfweite, Halsweite, Kragenweite, Schulterweite, Rückenweite, Oberweite, Brustweite, Überbrustweite, Unterbrustweite, Taillenweite, Bauchweite, Hüftweite, Gesäßweite, Oberschenkelweite, Wadenweite, Handweite, Handgelenkweite, Armlänge, Oberarmweite, Handlänge, Beinlänge, Schrittlänge, Knöchelweite, Fußlänge, Fußweite, Fußspannhöhe, Länge von Hals zu Schulter, Länge von Schulter bis Schritt, Länge Taille zum Schritt, Länge von Taille bis Knie; Geschlechtsangabe für Träger des Bekleidungsartikels, Altersangabe für Träger des Bekleidungsartikels und/oder
- die in Einrichtung C bereitgestellten Eigenschaften zu den weiteren ein oder mehreren Auswahlkriterien ausgewählt werden aus der Gruppe bestehend aus: Bekleidungsart; Bekleidungstyp; Passform der Bekleidung; Anlass des Tragens des Bekleidungsartikels; Farbe und/oder des Bekleidungsartikels; Material des Bekleidungsartikels, Hersteller des Bekleidungsartikels; und Preissegment des Bekleidungsartikels; Ort, an dem der Bekleidungsartikel gekauft werden kann, bevorzugt Ort der Niederlassung und/oder Online-Shop.

7. Vorrichtung gemäß einem der Ansprüche 1 bis 6, wobei die Einrichtung E so eingerichtet ist, dass sie
- die Solleigenschaften und die Eigenschaften des oder der zugeordneten Bekleidungsartikel, vorzugsweise gegenübergestellt oder überlagert, ausgibt und auf Einrichtung A darstellt und/oder
- den oder die zugeordneten Bekleidungsartikel dreidimensional, vorzugsweise gegenübergestellt oder überlagert zu einer Silhouette basierend auf ein oder mehreren Solleigenschaften, ausgibt und auf Einrichtung A darstellt und/oder
- den oder die zugeordneten Bekleidungsartikel und den oder die Orte, an dem der oder die Bekleidungsartikel gekauft werden können, vorzugsweise gegenübergestellt oder überlagert, ausgibt und auf Einrichtung A darstellt und/oder
- den oder die zugeordneten Bekleidungsartikel und den oder die Preise, zu denen der oder die Bekleidungsartikel gekauft werden können, vorzugsweise gegenübergestellt oder überlagert ausgibt und auf Einrichtung A darstellt.

8. Computerimplementiertes Verfahren zum Ermitteln und Ausgeben eines oder mehrerer passgenauer Bekleidungsartikel für einen Bekleidungssuchenden, **dadurch gekennzeichnet, dass** das Verfahren folgende Schritte umfasst
a. Eingeben und/oder Bereitstellen eines oder mehrerer personenbezogener Daten des Bekleidungssuchenden in eine geeignete Einrichtung A,
b. Ermitteln von Solleigenschaften eines Bekleidungsartikels unter Verwendung der gemäß Schritt a) bereitgestellten personenbezogener Daten des Bekleidungssuchenden durch eine geeignete Einrichtung B,
c. Bereitstellen von ein oder mehreren Eigenschaften vorbestimmter Bekleidungsartikel durch eine geeignete Einrichtung C, wobei die Eigenschaften zu ein oder mehreren in Schritt b) ermittelten Solleigenschaften korrelieren,
d. Zuordnen wenigstens eines vorbestimmten Bekleidungsartikels aus Schritt c) nach vorbestimmten Zuordnungsregeln auf Basis der in Schritt d) ermittelten Solleigenschaften durch eine geeignete Einrichtung D und
e. Ausgeben des wenigstens einen in Schritt e) zugeordneten Bekleidungsartikels durch eine geeignete Einrichtung E und Darstellung auf Einrichtung A.

9. Computerimplementiertes Verfahren gemäß Anspruch 8, wobei
- die Einrichtung A ein internetfähiges Gerät darstellt und der Bekleidungssuchende in Schritt a) in einer geeigneten Eingabemaske die personenbezogenen Daten eingibt oder die personenbezogenen Daten durch Verlinkung mit anderen Netzwerken bereitstellt und die so erhaltenen Eigenschaften mittels Datenübertragung in einer Datenbank auf einem Server gespeichert werden und
- die Einrichtungen B, C, D und E auf dem Server gemäß Schritt a) oder mittels Datenübertragung auf einem oder mehreren weiteren Servern eingerichtet sind und die Verfahrensschritte b), c) d) und e) durchgeführt werden und
- der oder die zugeordneten Bekleidungsartikel durch Einrichtung E in Schritt e) ausgegeben und auf dem internetfähigen Gerät des Bekleidungssuchenden dargestellt werden.

10. Computerimplementiertes Verfahren gemäß Anspruch 8 oder 9, wobei das Verfahren auf einer Webseite, einer WebAPP oder einer APP durchgeführt wird.

11. Computerimplementiertes Verfahren gemäß einem der Ansprüche 8 bis 10, wobei in Schritt a) zusätzlich ein oder mehrere weitere Auswahlkriterien des Bekleidungssuchenden eingegeben und/oder bereitgestellt werden.

12. Computerimplementiertes Verfahren gemäß einem der Ansprüche 8 bis 11, wobei
- die in Schritt a) eingegebenen und/oder bereitgestellten ein oder mehreren personenbezogenen Daten ausgewählt werden aus der Gruppe bestehend aus: Körpermaß des Bekleidungssuchenden, bevorzugt Körpergröße, Kopfumfang, Halsumfang, Schulterbreite, Rückenbreite, Brustumfang, Überbrustumfang, Unterbrustumfang, Taillenumfang, Bauchumfang, Hüftumfang, Gesäßumfang, Oberschenkelumfang, Wadenumfang, Handumfang, Handgelenkumfang, Armlänge, Oberarmumfang, Handlänge, Beinlänge, Schrittlänge, Knöchelumfang, Fußlänge, Fußbreite, Fußspannhöhe, Länge von Hals zu Schulter, Länge von Schulter bis Schritt, Länge Taille zum Schritt, Länge von Taille bis Knie; Geschlecht des Bekleidungssuchenden; und Alter des Bekleidungssuchenden und/oder
- die in Schritt a) die in Einrichtung A eingegebenen und/oder bereitgestellten ein oder mehreren Auswahlkriterien ausgewählt werden aus der Gruppe bestehend aus: Bekleidungsart; Bekleidungstyp; Passform der Bekleidung; Anlass des Tragens des Bekleidungsartikels; Farbe und/oder Muster des Bekleidungsartikels; Material des Bekleidungsartikels, Hersteller des Bekleidungsartikels; und Preissegment des Bekleidungsartikels; Ort, an dem der Bekleidungsartikel gekauft werden kann, bevorzugt Ort der Niederlassung und/oder Online-Shop und/oder
- die in Schritt c) bereitgestellten ein oder mehreren Eigenschaften zu dem oder den vorbestimmten Bekleidungsartikeln korrelieren zu den ermittelten Solleigenschaften ausgewählt aus der Gruppe bestehend aus: Körperlänge des Bekleidungsartikeltragenden, Länge des Bekleidungsartikels, Kopfweite, Halsweite, Kragenweite, Schulterweite, Rückenweite, Oberweite, Brustweite, Überbrustweite, Unterbrustweite, Taillenweite, Bauchweite, Hüftweite, Gesäßweite, Oberschenkelweite, Wadenweite, Handweite, Handgelenkweite, Armlänge, Oberarmweite, Handlänge, Beinlänge, Schrittlänge, Knöchelweite, Fußlänge, Fußweite, Fußspannhöhe, Länge von Hals zu Schulter, Länge von Schulter bis Schritt, Länge Taille zum Schritt, Länge von Taille bis Knie; Geschlechtsangabe für Träger des Bekleidungsartikels, Altersangabe für Träger des Bekleidungsartikels und/oder
- die in Schritt c) bereitgestellten Eigenschaften zu den weiteren ein oder mehreren Auswahlkriterien ausgewählt werden aus der Gruppe bestehend aus: Bekleidungsart; Bekleidungstyp; Passform der Bekleidung; Anlass des Tragens des Bekleidungsartikels; Farbe und/oder Muster des Bekleidungsartikels; Material des Bekleidungsartikels, Hersteller des Bekleidungsartikels; und Preissegment des Bekleidungsartikels; Ort, an dem der Bekleidungsartikel gekauft werden kann, bevorzugt Ort der Niederlassung und/oder Online-Shop.

13. Computerprogramm mit Programmcode zur Durchführung des Verfahrens nach einem der Ansprüche 8 oder 12, wenn das Programm in einem Computer und/oder mittels Datenübertragung auf einem oder mehreren Servern ausgeführt wird.

14. Computerprogramm nach Anspruch 13, gespeichert auf einem maschinenlesbaren Träger.
